Europäisches Patentamt

European Patent Office

Office européen des brevets

(11) Publication number: **0 087 855**
A2

# EUROPEAN PATENT APPLICATION

(21) Application number: 83300180.3

(22) Date of filing: 14.01.83

(51) Int. Cl.³: **B 29 H 7/14**
B 29 D 23/12

(30) Priority: 15.01.82 GB 8201158

(43) Date of publication of application:
07.09.83 Bulletin 83/36

(84) Designated Contracting States:
AT BE CH DE FR GB IT LI LU NL SE

(71) Applicant: WINSTER HOSE LIMITED
Stainsacre Lane
Whitby N. Yorkshire, YO22 4NL(GB)

(72) Inventor: Wheatley, William
Creek House Barton Common Road
Barton on Sea New Milton Hampshire(GB)

(72) Inventor: Darrington, Amos John
92 Upgang Lane
Whitby Yorkshire(GB)

(74) Representative: Lewis, Samuel Hewitt et al,
FORRESTER & BOEHMERT Widenmayerstrasse 4/1
D-8000 München 22(DE)

(54) Manufacture of reinforced hose.

(57) Steel-reinforced rubber hose is manufactured by extruding an elastomer layer (12) onto a mandrel (10), applying reinforcing wire (14) to the extruded material, raising the temperature of the wire by induction heating, extruding a further elastomer layer (16) over the reinforcement and heating the hose to effect curing.

## Manufacture of Reinforced Hose

This invention relates to the manufacture of metal-reinforced hose. One aspect of the invention concerns a method of manufacture of the kind, hereinafter called the kind specified, wherein a lining of the hose is formed on a mandrel, a metal reinforcement is applied to the lining whilst supported on the mandrel, curable elastomer is extruded onto the reinforcement to form a cover of the hose, the hose is cured or permitted to cure and the mandrel is withdrawn from the hose.

In known methods of the kind specified, the reinforced hose is usually at ambient temperature when it enters the extruder which forms the cover. The cover material is heated by the extruder to a temperature above the ambient, in order to faciliate extrusion and penetration of the cover material into the reinforcement. When the cover material contacts the reinforcement, heat is conducted into the reinforcement from the cover material and the cover material is chilled. This reduces penetration of the cover material into the reinforcement, with the result that air can be retained within the hose, beneath the cover.

According to a first aspect of the invention, prior to extrusion of the curable elastomer onto the reinforcement, the reinforcement is heated sufficiently to ensure that the temperature of the reinforcement when the reinforcement is contacted by the elastomer is substantially in excess of the ambient temperature.

According to a second aspect of the invention heat is generated within the reinforcement.

The generation of heat within the reinforcement may reduce or eliminate conduction of heat to the reinforcement from adjacent parts of the hose or it may enable heat to be conducted to adjacent parts of the hose from the reinforcement.

Heat may be generated in the reinforcement before or after application of the cover material to the reinforcement. Alternatively, heat may be generated in the reinforcement both before and after application of the cover material.

There is also provided, in accordance with the invention, apparatus for use in the manufacture of steel reinforced hose, the apparatus comprising an extruder for extruding curable elastomer onto the reinforcement to form a cover of the hose, a curing chamber into which the hose passes after leaving the extruder and an induction heater for inducing electrical currents to flow in the reinforcement.

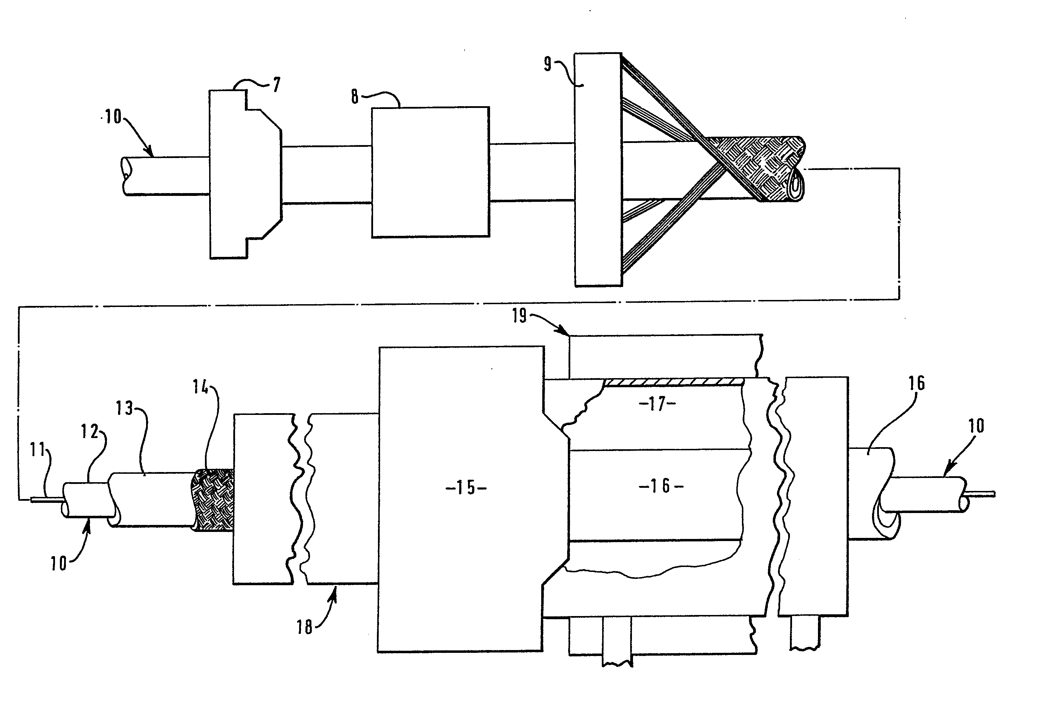

An example of a method embodying the first and second aspects of the invention and in which there is used apparatus according to the third aspect of the invention will now be described, with reference to the accompanying drawing, which illustrates diagrammatically certain stages in the manufacture of a hose.

There is used in the manufacture of the hose a flexible mandrel 10 which typically comprises a core 11 of steel wire and a covering 12 of nylon or other thermo-plastic. A mandrel without a central wire may be used. Each mandrel may have a length in excess of 100m and mandrels are joined end-to-end to enable the hose-manufacturing process to be carried out continuously. The mandrel is passed through an extruder 7 which extrudes onto the mandrel a tubular lining 13 of the hose. The lining material is in a thermo-plastic condition and is preferably formed of a curable elastomer.

There is applied to the lining 13 of the hose by means of known apparatus 9 a metal reinforcement 14 in the form of a braid or a spiral winding of steel wire. The reinforcement covers the inner part 13 substantially completely, although there will generally be small interstices between adjacent wires.

The reinforcement may comprise a plurality of layers and may comprise both braided wires and spirally wound wires. To avoid the deformation of the lining 13 during application of the reinforcement, the inner part may be chilled by liquid nitrogen in a chamber 8 immediately prior to application of the reinforcement. In this case, the lining is permitted to resume the ambient temperature after the reinforcement has been applied. A considerable interval of time may elapse between extrusion of the lining and reinforcement and between reinforcement and the subsequent steps. During these intervals, the hose may be stored on a drum and the mandrel lengths may be separated from each other.

The reinforcement 14 and lining 13, supported on the mandrel 10, are then passed through a cross head extruder 15 through which curable elastomer is extruded onto the reinforcement to form the cover 16 of the hose. In order conveniently to distinguish between the material which forms the lining 13 and the material which forms the cover 16 of the hose, the latter material is called hereinafter the cover material. The hose then passes into a curing chamber 17 and, as shown in the drawing, the hose may emerge from the cross head extruder 15 directly into the curing chamber. In the curing chamber, the hose is heated to promote curing of the cover 16 and of the lining 13. A heating medium may be used to convey heat to the hose in the curing chamber. The heating medium may be a hot gas, steam or other hot vapour, a hot liquid or a fluidised bed. The hose may be supported by the heating medium, for example in a case where the curing chamber contains a fluidised bed or a molten salt. In a case where the heating medium is not sufficiently dense to support the hose, the hose may be suspended in the curing chamber as a catenary. Generally, a pressure above the ambient pressure is maintained in the curing chamber 17 to promote consolidation of the hose.

The cured hose emerges from the heating chamber through a seal which substantially prevents escape of the heating medium. The hose may then be cooled by passing the hose through cold water and is cut into lengths, each length preferably corresponding to one mandrel. The mandrels are separated from each other and each mandrel is withdrawn from the length of hose which it occupies.

Methods generally including the steps hereinbefore mentioned with reference to the drawing are known. In these known methods, extruder 15 heats the cover material so that this material has a temperature somewhat above the ambient temperature when it is extruded onto the reinforcement 14. The extruder 15, has a temperature somewhat above the ambient temperature. The temperature of the outer curable material when it is extruded is typically in the region of 100°C. The temperature maintained in the curing chamber 17, or at least that part of the curing chamber which is adjacent to the cross head extruder, is typically in the region of 160°C. If the reinforcement 14 enters the extruder at ambient temperature, it will receive heat from the extruder as it passes to the extrusion die. However, since the speed of the hose is usually in excess of seven metre per minute, the increase in temperature of the reinforcement arising from transfer of heat to the reinforcement from the extruder is only slight, typically a few °C.

We have found that significant advantages can be obtained by heating the reinforcement 14 before it passes through the extruder 15 so that, when the reinforcement is first contacted by the cover material, the reinforcement is at a temperature substantially above the ambient temperature. Preferably, the temperature of the reinforcement when contacted by the cover material is not substantially lower than that of the cover material and we have obtained particularly good results by heating the reinforcement to a temperature in the region of 180°C immediately before it passes into the extruder 15. Other temperatures may be used, depending upon the size and type of hose.

For effecting heating of the reinforcement 14, we prefer to use an induction heater 18 which comprises a high frequency generator and a heating coil of generally tubular form through which the reinforced hose supported on the mandrel 10, passes to the extruder. The heater 18 induces electrical currents in the reinforcement and thereby causes the generation of heat within the reinforcement. Additionally, or alternatively, the heater 18 may be adapted to transfer heat to the reinforcement by one or more of conduction, convection and radiation. However, we have found that an induction heater alone raises the temperature of the reinforcement rapidly to the required value in an efficient manner.

In addition to or in place of the induction heater 18, a further heater 19 may be provided immediately downstream of the extruder 15. This down-stream heater is arranged to cause the generation of heat in the reinforcement 14. It will be appreciated that, after the cover 16 of the hose has been extruded onto the reinforcement, heat can be transferred to the reinforcement only through one or more other parts of the hose.

The downstream heater 19 may be an induction heater in which case that part of the curing chamber 17 which is adjacent to the heater 19 is formed of a non-magnetic, non-metallic material, for example ceramics or glass. Alternatively, there may be interposed between the extruder and the curing chamber a tube of ceramic, glass-reinforced plastics or glass through which the hose passes and outside which there is disposed an induction heater.

We have found that heating of the reinforcement 14 prior to entry into the extruder 15 either alone or in combination with the generation of heat in the reinforcement downstream of the extruder or, alternatively, the generation of heat in the reinforcement downstream of the extruder without heating of the reinforcement upstream of the extruder provides a number of advantages.

The chilling effect of the reinforcement on the cover material is reduced or eliminated. Any moisture present in the reinforcement is driven off by heating prior to application of the cover. Whenever the temperature of the reinforcement exceeds that of the lining 13, heat is conducted from the reinforcement to the lining to raise the temperature thereof. The temperature of the lining rises to the required maximum value more quickly when heating of the lining is effected partly by the generation of heat in the reinforcement.

Furthermore, curing of the lining commences at an earlier stage than would be the case if the lining was heated only by conduction of heat through the cover 16 and the reinforcement 14 whilst the lining is disposed within the curing chamber 17. As curing of the lining 13 commences somewhat earlier than is the case in known methods, the risk of material from the lining penetrating through the reinforcement to cause bumps or other blemishes in the cover 16 is reduced. An earlier and more effective cure of the lining 13 is achieved by means of the induction heater 18, as compared with the known methods hereinbefore mentioned.

The heating of the reinforcement 14 other than by conduction of heat through the cover 16 also improves curing of the cover in a similar way.

We have found that application of the present invention enables hose to be cured more quickly than would otherwise be the case and assists with the production of high quality hose free from blemishes.

CLAIMS:

1.     A method of manufacturing a metal-reinforced hose wherein a lining of the hose is formed on a mandrel, a metal reinforcement is applied to the lining whilst supported on the mandrel, curable elastomer is extruded onto the reinforcement to form a cover of the hose, the cover is cured or permitted to cure and the mandrel is withdrawn from the hose and wherein the temperature of the reinforcement is raised to a value above the ambient temperature either prior to extrusion of the cover material onto the reinforcement so that the temperature of the reinforcement when contacted by the cover material is substantially in excess of the ambient temperature, or by generation of heat within the reinforcement or in both of these ways.

2.     A method according to Claim 1 wherein the temperature of the reinforcement when contacted by the cover material is not substantially lower than that of the cover material when the latter contacts the reinforcement.

3.     A method according to Claim 1 wherein the temperature of the cover material, when extruded onto the reinforcement, is substantially above the ambient temperature.

4.     A method according to Claim 1 wherein the temperature of the reinforcement when it is contacted by the cover material is substantially above the temperature of the external surface of the mandrel.

5.     A method according to any preceding claim wherein the lining is formed of elastomer material and is heated when the reinforcement is heated.

6.     A method according to any preceding claim wherein heat is generated in the reinforcement prior to contact of the cover material with the reinforcement and at a rate which ensures that the temperature of the reinforcement when the reinforcement is contacted by the cover material is substantially in excess of the ambient temperature.

7. A method according to Claim 1 wherein heat is generated in the reinforcement after application of the curable material which forms the cover of the hose.

8. Apparatus for use in the manufacture of metal-reinforced hose and comprising an extruder for forming a cover of the hose, a curing chamber into which the hose passes after leaving the extruder and an induction heater for inducing electrical currents to flow in the reinforcement.

9. Apparatus for use in the manufacture of metal-reinforced hose and comprising an extruder for forming a cover of the hose, a curing chamber into which the hose passes after leaving the extruder and means for heating the hose upstream of the extrusion orifice, as the hose enters the extruder.

10. Any novel feature or novel combination of features disclosed herein or in the accompanying drawing.

7

10

8

9

1

19

14

13

-17-

12

16

11

-15-

-16-

10

10

18

10

0087855